(19) Europäisches Patentamt
European Patent Office
Office européen des brevets

(11) EP 3 043 044 A1

(12) EUROPEAN PATENT APPLICATION
published in accordance with Art. 153(4) EPC

(43) Date of publication:
13.07.2016 Bulletin 2016/28

(51) Int Cl.:
F02B 37/02 (2006.01)   F01N 5/04 (2006.01)

(21) Application number: 14841705.8

(86) International application number:
PCT/JP2014/072323

(22) Date of filing: 26.08.2014

(87) International publication number:
WO 2015/033822 (12.03.2015 Gazette 2015/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 04.09.2013   JP 2013183006

(71) Applicant: Maritime Innovation Japan Corporation
Tokyo 140-0001 (JP)

(72) Inventor: TAKAISHI, Tatsuo
Tokyo 140-0001 (JP)

(74) Representative: Giles, Ashley Simon
Haseltine Lake LLP
Lincoln House, 5th Floor
300 High Holborn
London WC1V 7JH (GB)

(54) **EXHAUST GAS DEVICE AND POWER GENERATION SYSTEM**

(57) Exhaust apparatus 280 includes first conduits 251 and 252 configured to guide gas discharged from a plurality of combustion chambers 100-1 to 100-6 to turbocharger 204, second conduits 261, 262, and 263 that are provided inside the first conduits and guide the gas to the turbocharger, and a plurality of valves 271-1 to 271-6, and 272 that are provided corresponding to the combustion chambers and configured to guide the gas to the first conduit or the second conduit.

FIG. 2

EP 3 043 044 A1

## Description

Technical Field

The present invention relates to a turbocharging mechanism of an internal combustion engine.

Background Art

Turbochargers that compress air with exhaust pressure from internal combustion engines and supply the compressed air to the internal combustion engines are known. It is known that a pulse turbocharging system and a constant pressure turbocharging system are used in large-sized diesel engines for a marine vessel. The constant pressure turbocharging system is a system in which time variations in exhaust pressure are averaged by temporarily introducing an exhaust pipe into a collecting pipe so as to preferably supply constant pressure to a turbocharger. The pulse turbocharging system is a system in which exceptional pressure adjustment is not performed during an exhaust process.

Generally, the pulse turbocharging system is suitable for a case where an engine is in a low-load state. In the pulse turbocharging system, there is a timing at which the pressure (scavenging pressure) of air supplied into a cylinder temporarily decreases. If the scavenging pressure becomes lower than the exhaust pressure, it takes time to complete exhaust, and thus it is possible that a subsequent combustion cycle cannot be smoothly carried out. In order to prevent this, it is necessary to advance an exhaust timing (specifically, to open an exhaust valve before a piston moves down to the lowest position thereof), for example. As a result, energy loss increases when combustion energy is converted to kinetic energy of a piston. An increase in energy loss means a decrease in fuel-efficiency.

Conversely, the constant pressure turbocharging system is generally suitable for a case where an engine is in a high-load state. In the constant pressure turbocharging system, exhaust can be performed smoothly, and therefore, energy loss due to the adjustment of exhaust timing is small when combustion energy is converted to kinetic energy of a piston. However, in a low-load state, energy loss increases in a process for converting exhaust energy to scavenging pressure. In other words, it is not possible to make best use of exhaust energy.

Patent Document 1 describes an exhaust mechanism technique for adjusting, in accordance with a load state of an engine, the pressure of gas discharged from an internal combustion engine having a plurality of cylinders before the gas is supplied to a turbocharger.

Citation List

Patent Documents

Patent Document 1: JP H8-246890A

Summary of Invention

Technical Problem

In the technique described in Patent Document 1, the pressure of exhaust gas supplied to a turbocharger is adjusted by making the volume of the path of the exhaust gas variable. However, a stretchable membrane material is used in the exhaust path, and therefore, the reliability of an apparatus may be insufficient.

The object of the present invention is to provide a highly reliable mechanism for adjusting exhaust pressure in a system for turbocharging an internal combustion engine having a plurality of combustion chambers.

Solution to Problem

An aspect of the present invention provides an exhaust apparatus including a first conduit configured to guide gas discharged from a plurality of combustion chambers to a turbocharger, a second conduit that is provided inside the first conduit and configured to guide the gas to the turbocharger, and a plurality of valves that are provided corresponding to the combustion chambers and configured to guide the gas to the first conduit or the second conduit.

In a preferable aspect, the second conduit includes a plurality of first connecting pipes each connected to a valve, a collecting pipe connected to the plurality of connecting pipe, and a second connecting pipe connected to the collecting pipe and the turbocharger.

In a preferable aspect, the exhaust apparatus further includes a control unit configured to control the valves in accordance with a load on an internal combustion engine including the plurality of combustion chambers such that the gas flows into only one of the first conduit and the second conduit.

In a preferable aspect, when the load is smaller than a predetermined value, the control unit guides the gas to the second conduit, and when the load is equal to or larger than the predetermined value, the control unit guides the gas to the first conduit.

Another aspect of the present invention provides a power generation system includes an internal combustion engine including a plurality of combustion chambers, a turbocharger configured to supply compressed air to the internal combustion engine, a first conduit configured to guide gas discharged from the combustion chambers to the turbocharger, a second conduit that is provided inside the first conduit and configured to guide the gas to the turbocharger, and a plurality of valves that are provided corresponding to the combustion chambers and configured to guide the gas to the first conduit or the second conduit.

With the present invention, in a system for turbocharging an internal combustion engine having a plurality of combustion chambers, a highly reliable mechanism for adjusting exhaust pressure is provided.

Brief Description of the Drawings

FIG. 1 is a schematic view of the external appearance of power generation system 1.
FIG. 2 is a schematic cross-sectional view of power generation system 1.
FIG. 3 is a functional block diagram of power generation system 1.
FIG. 4 is a detailed view of exhaust apparatus 280.

Reference Signs List

1 ... Power generation system, 10 ... Internal combustion engine, 100 ... Cylinder unit, 301 ... Base, 302 ... Base, 101 ... Combustion chamber, 102 ... Crankcase, 103 ... Cylinder head, 104 ... Exhaust valve, 105 ... Exhaust valve driving control device, 271 ... First valve, 272 ... Second valve, 251 ... First collecting pipe, 252 ... First coupling pipe, 261 ... Second collecting pipe, 262 ... Second coupling pipe, 263 ... Third coupling pipe, 201 ... Exhaust pipe, 205 ... Feed pipe, 204 ... Turbocharger, 206 ... Radiator, 207 ... Scavenging trunk, 209 ... Feed pipe, 280 ... Exhaust apparatus, 290 ... Conduit, 281 ... Valve control unit, 120 ... Engine control unit, 211 ... Turbine, 212 ... Compressor, 213 ... Sensor, 215 ... Outlet, 216 ... Air inlet

Description of Embodiments

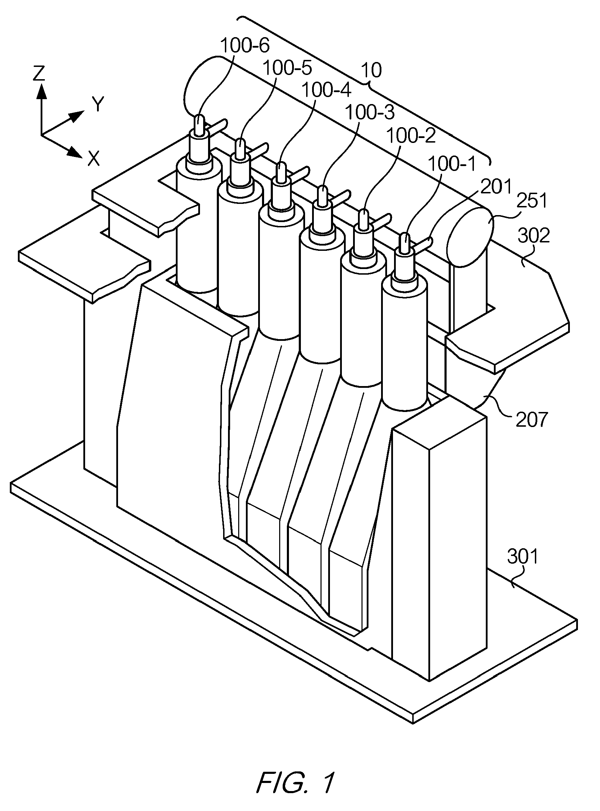

FIG. 1 is a schematic view of the external appearance of power generation system 1 according to an embodiment of the present invention. It should be noted that some structural elements are omitted as needed in the drawings below.

Power generation system 1 is provided near the center of a ship. A bow-stern direction is taken as X (+X), a vertical direction is taken as Z, and a port-starboard direction is taken as Y (+Y). That is, a crankshaft (not shown) is installed in the ship such that the rotation axis of the crankshaft extends in parallel with the X direction, and a propeller (not shown) is provided at an end of the crankshaft. Pressure energy generated by the combustion of fuel is converted to mechanical force in cylinder units 100, and thus propulsion force is generated by the propeller being moved via the crankshaft.

Power generation system 1 is broadly divided into internal combustion engine 10 and structures (including an exhaust system, a turbocharging system, and an air supply system) accompanying internal combustion engine 10. Internal combustion engine 10 is a power source of the ship. In this embodiment, internal combustion engine 10 is a 2-cycle diesel engine. Internal combustion engine 10 is installed on base 301 fixed to the ship.

Internal combustion engine 10 includes a plurality of cylinder units 100. In this embodiment, internal combustion engine 10 includes six cylinder units in total, namely cylinder unit 100-1 to 100-6. However, this is merely an example, and it is sufficient that the number of cylinder units is 2 or more.

Exhaust pipe 201 is provided to each cylinder unit 100 and guides exhaust gas from each cylinder unit 100 to exhaust apparatus 280. Exhaust apparatus 280 guides the exhaust gas to a turbocharger (omitted in FIG. 1). The turbocharger takes in outside air and compresses the taken-in air using pressure energy of the exhaust gas. The compressed air is supplied to cylinder units 100 via scavenging trunk 207.

The structures accompanying internal combustion engine 10 including exhaust apparatus 280 is fixed using base 302. Base 302 is fixed to a casing of the internal combustion engine. Base 302 allows an operator to perform work such as maintenance on base 302.

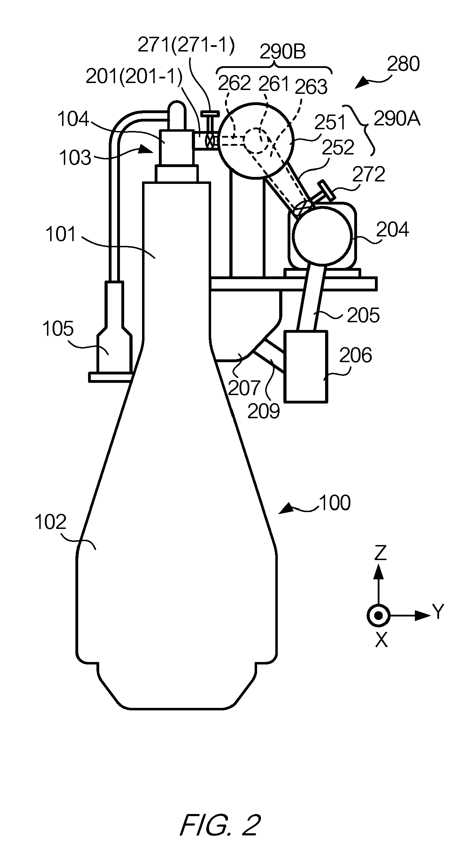

FIG. 2 is a schematic cross-sectional view of power generation system 1. The structure of power generation system 1 will be described with reference to FIG. 2 with a focus on the flow of gas (taken-in air and exhaust gas) in power generation system 1.

Since cylinder units 100 have the same structure, cylinder unit 100-1 is taken as an example and described. However, cylinder units 100 do not necessarily need to operate at the same operation timing (air supply/exhaust cycle).

Cylinder unit 100 includes combustion chamber 101, crankcase 102, cylinder head 103, exhaust valve 104, and exhaust valve driving control device 105. Combustion chamber 101 includes a cylinder liner, a piston, an air inlet, and the like (these are not shown). Air (compressed air) and fuel are introduced into combustion chamber 101, and combustion is performed. The fuel is supplied into combustion chamber 101 via cylinder head 103 at a predetermined timing using a fuel control device (not shown). Crankcase 102 includes a connecting rod, a crosshead and the like and converts the vertical motion of the piston to the rotational motion of the crankshaft. Cylinder head 103 accommodates exhaust valve 104. Exhaust valve 104 discharges, from exhaust pipe 201, the exhaust gas discharged from combustion chamber 101, at an appropriate timing. Exhaust valve driving control device 105 opens and closes exhaust valve 104 at a pre-set timing using oil pressure.

The exhaust gas discharged through exhaust pipe 201 is introduced to exhaust apparatus 280 connected to exhaust pipe 201. Exhaust apparatus 280 includes first valve 271 (first valve 271-1 to first valve 271-6), conduit 290A, conduit 290B, and second valve 272. Conduit 290A and conduit 290B are structures for guiding the exhaust gas to turbocharger 204. Conduit 290A and conduit 290B are manufactured by molding a material such as a stainless steel sheet or an aluminum alloy sheet that has excellent thermal resistance, pressure resistance, and corrosion resistance, for example. It should be noted that the surfaces of conduit 290A and conduit 290B may be processed for the purpose of thermal insulation, and the like as needed. More specifically, conduit 290A is constituted by first collecting pipe 251 and first coupling pipe 252. Conduit 290B is constituted by second coupling pipes 262, second collecting pipe 261, and third coupling pipe 263, and is provided inside conduit 290A.

First valve 271 is provided on a surface of first collecting pipe 251. Second valve 272 is provided on a surface of first coupling pipe 252. First valve 271 and second valve 272 are valves, such as an electromagnetic valve or an electrically operated valve, for determining a channel of the exhaust gas, and are opened and closed in accordance with control signals (more specifically, at least one of a first state and a second state, which are possible states of the valves, is selected). More specifically, one side of first valve 271 is connected to exhaust pipe 201, and the other side of first valve 271 is connected to second coupling pipe 262 and first collecting pipe 251. First valve 271 guides the exhaust gas that flows thereinto through exhaust pipe 201 to one of conduit 290A and conduit 290B in accordance with the state of the valve. When conduit 290A is selected as a channel of the exhaust gas by first valve 271, second valve 272 couples conduit 290A and turbocharger 204. When conduit 290B is selected, second valve 272 couples conduit 290B and turbocharger 204.

Turbocharger 204 takes in air from the outside and compresses the taken-in air using the energy of the exhaust gas. The compressed air is guided to radiator 206 via feed pipe 205. It should be noted that the exhaust gas, which has lost the energy, is discharged from turbocharger 204. Radiator 206 is equipped with a water cooling system, for example, and cools air. The cooled air is supplied to scavenging trunk 207 via feed pipe 209. Scavenging trunk 207 comes into contact with the side walls of cylinder units 100. Holes are provided in scavenging trunk 207 at positions corresponding to a plurality of scavenging ports provided in lower portions of the side surfaces of cylinder units 100. In a state in which the piston is located at the lowest position, the inside of a cylinder is in communication with the scavenging trunk 207 via this hole, and the compressed air is supplied to combustion chamber 101 through this hole.

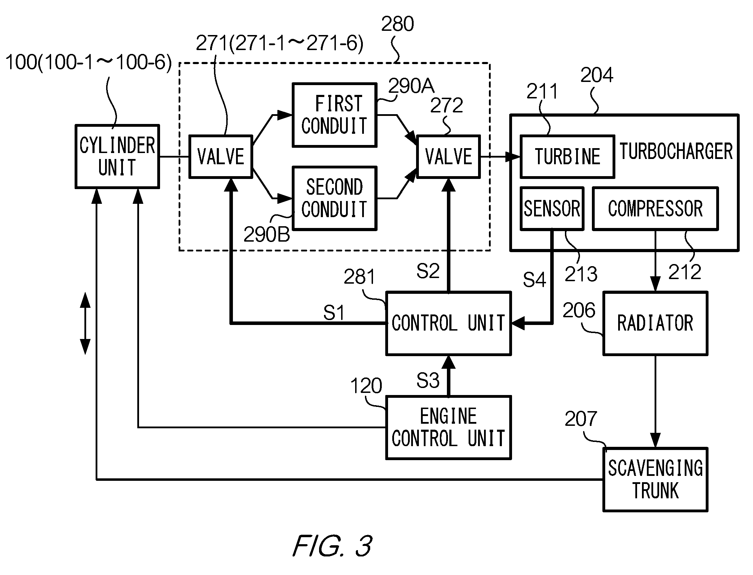

FIG. 3 is a functional block diagram of power generation system 1. The function of power generation system 1 will be described with reference to FIG. 3 with a focus on a control mechanism of power generation system 1. As described above, the exhaust gas from combustion chambers 101 is guided to exhaust apparatus 280 through corresponding exhaust pipes 201, is guided to conduit 290A or conduit 290B in accordance with the states of the first valves 271, and is guided to turbocharger 204 via second valve 272. Control unit 281 controls first valves 271 and second valve 272. Control unit 281 is realized using a processor or the like, and outputs control signals S1 and S2 to first valves 271 and second valve 272. Control signals S1 and S2 designate the states of the valves.

In one embodiment, the selection of one exhaust route from that of conduit 290A and that of conduit 290B, and the determination of an operation timing (switching timing) of first valves 271 and second valve 272 are performed based on information (S3) about the load state of an engine outputted by engine control unit 120. For example, every time a predetermined period of time has elapsed, control unit 281 obtains information about the load state of the engine at that instant and uses the information to select the route. Alternatively, the load state may be measured for a predetermined period of time, and the exhaust route may be selected using an average value measured for every predetermined period of time.

Engine control unit 120 is realized using a processor, a sensor and the like. Engine control unit 120 obtains information about a combustion state and a load state (these states are expressed by a ratio with respect to a rated output value or a normal output value, for example), and controls the amount of fuel supplied into combustion chambers 101, the timing at which the fuel is supplied, and the timing at which exhaust valves 104 are opened and closed in combustion chambers 101 in accordance with a control program stored in advance.

With regard to the selection of the route, for example, if the load is smaller than a predetermined reference value, first valves 271 and second valve 272 are controlled such that the exhaust gas will be guided to conduit 290B, and if the load is equal to or larger than a predetermined reference value (e.g., 50% of a rated output value), first valves 271 and second valve 272 are controlled such that the exhaust gas will be guided to conduit 290A. In this case, the control signals are provided (namely, second valve 272 and all of first valves 271 operate) at the same timing. That is, all of the valves are opened and closed at the same time. By employing this control method, the optimum exhaust route is selected in accordance with a load on internal combustion engine 10, and thus fuel-efficiency is improved. It should be noted that a certain range may be considered as the predetermined value. For example, as long as the measured load varies in a certain range (e.g., from 40% to 60%), even if the load increases from below 50% to above 50% or decreases from above 50% to below 50%, a currently selected route may be continuously used. Alternatively, even if the load varies in a range above 50% or in a range below 50%, when the variation range (variation rate) per unit time is larger than a predetermined value, the exhaust route may be changed.

The exhaust gas supplied to turbocharger 204 flows into turbine 211 inside turbocharger 204, and operates turbine 211. Turbine 211 includes a turbine shaft, a turbine blade, and the like. The rotating force of the turbine shaft operates compressor 212. It should be noted that turbocharger 204 may be equipped with a pressure adjusting mechanism such as a waste gate valve in addition to exhaust apparatus 280. Compressor 212 takes in outside air through air inlet 216 and compresses the air. The compressed air is supplied to combustion chambers 101 of cylinder units 100 via radiator 206 and scavenging trunk 207. The exhaust gas, which has passed through turbine 211, is discharged from outlet 215. Sensor 213 detects the pressure of the exhaust gas supplied to turbocharger 204. Detected information (S4) may be outputted to control unit 281 as needed and used for the control of the valves as information for estimating the load state of the engine.

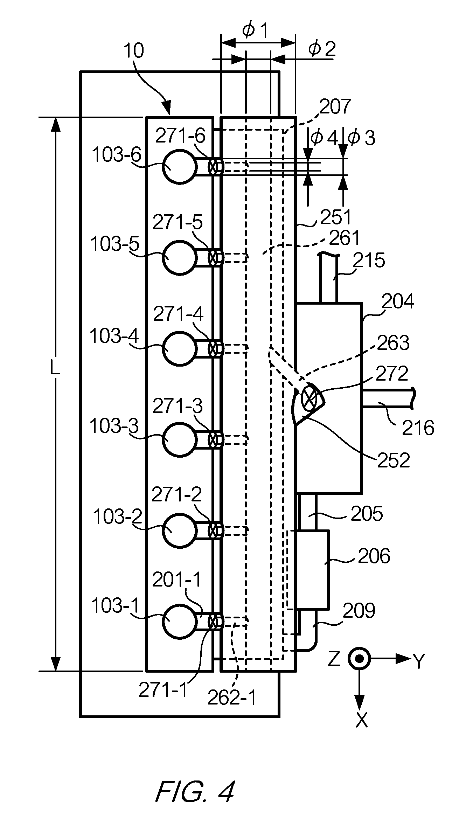

FIG. 4 is a detailed view of the structure of exhaust apparatus 280. First collecting pipe 251 is a cylindrical pipe having a cross-sectional diameter of $\varphi 1$ and a length of L. Second collecting pipe 261 is a cylindrical pipe having a diameter of $\varphi 2$ and a length of L. The diameters of the pipes satisfy the following relationships.

$$\varphi 1 > \varphi 2 > \varphi 4 \ldots (1)$$

$$\varphi 1 > \varphi 3 > \varphi 4 \ldots (2)$$

$$\varphi 1/\varphi 3 > \varphi 2/\varphi 4 \ldots (3)$$

Each of first valves 271 realizes one of a first state in which only the inlet portion of second coupling pipes **262** having an inner diameter of $\varphi 4$ is closed in exhaust pipe 201 having an inner diameter of $\varphi 3$ and a second state in which the inlet portion of second coupling pipes **262** having an inner diameter of $\varphi 4$ is opened in exhaust pipe 201 having an inner diameter of $\varphi 3$ and the other portions are closed. In the first state, the exhaust gas is guided to only outer conduit 290A, and in the second state, the exhaust gas is guided to only inner conduit 290B.

When conduit 290A is selected, the exhaust gas is supplied to turbocharger 204 after the time-variation of the pressure is smoothed in first collecting pipe 251 in which the exhaust gas from all the exhaust pipes 201 merge. When conduit 290B is selected, the time-variation of the pressure is slightly smoothed in second collecting pipe 261 in which the exhaust gas from all the second coupling pipes 262 merge, but the effect of this is smaller compared with the case where conduit 290A is selected, due to the difference in volume between first collecting pipe 251 and second collecting pipe 261. In other words, conduit 290A corresponds to a conventional constant pressure turbocharging system, and the route of conduit 290B corresponds to a conventional pulse turbocharging system. That is, it can be understood that exhaust apparatus 280 has a function of mechanically switching the constant pressure turbocharging system and the pulse turbocharging system.

With the above embodiment, an exhaust path that is suitable for the improvement of fuel-efficiency can be selected in accordance with the load state of internal combustion engine 10. In the above embodiment, a soft material such as a membrane is not used, and therefore, there is no risk of deterioration due to repeated expansion and contraction. Moreover, the valves can be made of metal or the like having high corrosion resistance, and therefore, there is also no risk of members deteriorating due to exposure to high-temperature and high-pressure exhaust gas.

Although selectable exhaust paths have been added, one path is provided inside the other path, and therefore, there is less risk that the size of the entire apparatus will increase compared with a conventional turbocharging system. In addition, the above embodiment according to the present invention has no influence on the arrangement of internal combustion engine 10, turbocharger 204, their downstream device group, and the like. Accordingly, it is unnecessary to completely redesign the entire turbocharging system, and the above-mentioned effect can be obtained by merely replacing the structure of a portion for connecting conventional internal combustion engine 10 and the turbocharger with exhaust apparatus 280 according to the above embodiment.

Modified examples

The shape of the valves and the positions at which the valves are attached are not limited to those of the above-described embodiment. For example, branch pipes that each have one inlet and two outlets and serve as a mechanism for realizing a state in which one of the branches is closed and the other is open may be provided in the latter portions of exhaust pipes 201 instead of first valves 271. That is, it is sufficient that the exhaust apparatus of the present invention has a function of selecting one of two or more possible exhaust routes.

Moreover, first valves 271 and second valve 272 may realize a state in which the exhaust gas is guided to both conduits 290A and 290B. In this case, there are three possible states, namely (1) a state in which the exhaust gas flows in only conduit 290A, (2) a state in which the exhaust gas flows in only conduit 290B, and (3) a state in which the exhaust gas flows in conduit 290A and conduit 290B. As described above, the exhaust routes are not necessarily provided separately, and a space that is common to one exhaust route and the other exhaust route may be present.

In short, the exhaust apparatus of the present invention includes a first conduit configured to guide gas discharged from a plurality of combustion chambers to a turbocharger, a second conduit that is provided inside the first conduit and configured to guide the gas to the turbocharger, and a plurality of valves that are provided corresponding to the combustion chambers and configured to guide the gas to the first conduit or the second conduit.

The shape and the size of the conduit 290B are not limited to those as described above as long as conduit 290B is provided inside conduit 290A. For example, $\varphi2$ and $\varphi4$ may be the same. That is, the exhaust route of conduit 290B may have a smaller function of suppressing the variations in exhaust pressure or making the time variations in pressure uniform compared with the exhaust route of conduit 290A, or may have practically no such a function.

Control unit 281 may control first valves 271 such that the exhaust gas flows into both conduit 290A and conduit 290B in a case where internal combustion engine 10 is in a high-load state. This increases the effective capacity of the collecting pipe and improves the effect of smoothing the pressure.

A plurality of first collecting pipes 251 and a plurality of second collecting pipes 261 may be provided. In other words, one exhaust apparatus 280 may be provided not for all the cylinder units 100 included in internal combustion engine 10 but for each partial cylinder unit group. For example, first valves 271-1 to first valves 271-3, conduit 290A and conduit 290B are provided for cylinder units 100-1 to 100-3, and first valves 271-4 to first valves 271-6, another conduit 290A, and another conduit 290B are provided for cylinder units 100-4 to 100-6.

The present invention can be used in a motor that is an internal combustion engine other than a diesel engine, such as a reciprocating engine including a gasoline engine, and that includes a turbocharging mechanism using exhaust energy.

**Claims**

1. An exhaust apparatus comprising:

   a first conduit configured to guide gas discharged from a plurality of combustion chambers to a turbocharger;
   a second conduit that is provided inside the first conduit and configured to guide the gas to the turbocharger; and
   a plurality of valves that are provided corresponding to the combustion chambers and configured to guide the gas to the first conduit or the second conduit.

2. The exhaust apparatus according to claim 1, wherein the second conduit includes:

   a plurality of first connecting pipes each connected to a valve;

   a collecting pipe connected to the plurality of connecting pipes; and
   a second connecting pipe connected to the collecting pipe and the turbocharger.

3. The exhaust apparatus according to claim 1 or 2, further comprising
   a control unit configured to control the valves in accordance with a load on an internal combustion engine including the plurality of combustion chambers such that the gas flows into only one of the first conduit and the second conduit.

4. The exhaust apparatus according to claim 3, wherein when the load is smaller than a predetermined value, the control unit guides the gas to the second conduit, and
   when the load is equal to or larger than the predetermined value, the control unit guides the gas to the first conduit.

5. A power generation system comprising:

   an internal combustion engine including a plurality of combustion chambers;
   a turbocharger configured to supply compressed air to the internal combustion engine;
   a first conduit configured to guide gas discharged from the combustion chambers to the turbocharger;
   a second conduit that is provided inside the first conduit and configured to guide the gas to the turbocharger; and
   a plurality of valves that are provided corresponding to the combustion chambers and configured to guide the gas to the first conduit or the second conduit.

FIG. 1

FIG. 2

FIG. 3

10

$\phi 1$

$\phi 2$

103-6

271-6

103-5

271-5

103-4

271-4

103-3

271-3

103-2

271-2

201-1

103-1

271-1

262-1

207

$\phi 4$ $\phi 3$

251

261

215

204

263

272

216

252

205

206

209

L

Z Y

X

FIG. 4

**EP 3 043 044 A1**

## INTERNATIONAL SEARCH REPORT

| International application No. |
|---|
| PCT/JP2014/072323 |

**A. CLASSIFICATION OF SUBJECT MATTER**
*F02B37/02*(2006.01)i, *F01N5/04*(2006.01)i

According to International Patent Classification (IPC) or to both national classification and IPC

**B. FIELDS SEARCHED**

Minimum documentation searched (classification system followed by classification symbols)
F02B37/02, F01N5/04

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2009-097335 A (Mazda Motor Corp.), 07 May 2009 (07.05.2009), abstract; paragraphs [0157], [0158], [0164], [0165]; fig. 4 to 7, 18 & US 2009/0094978 A1 | 1,3-5 |
| A | JP 56-32037 A (Guenther Dibelius), 01 April 1981 (01.04.1981), fig. 1 to 5 & US 4443153 A & GB 2057063 A & DE 2934041 A1 | 1,3-5 |
| A | JP 2010-185402 A (Mazda Motor Corp.), 26 August 2010 (26.08.2010), abstract; fig. 2 to 8 & US 2010/0206265 A1 & EP 2218886 A1 | 1,3-5 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 September, 2014 (24.09.14) | 07 October, 2014 (07.10.14) |

| Name and mailing address of the ISA/ Japanese Patent Office | Authorized officer |
|---|---|
| Facsimile No. | Telephone No. |

Form PCT/ISA/210 (second sheet) (July 2009)

11

**INTERNATIONAL SEARCH REPORT**

| International application No. |
|---|
| PCT/JP2014/072323 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-107542 A  (Mazda Motor Corp.), 07 June 2012 (07.06.2012), fig. 1 to 4 (Family: none) | 1,3-5 |
| P,X | JP 2014-80900 A  (Mazda Motor Corp.), 08 May 2014 (08.05.2014), abstract; fig. 1 to 4, 8, 9 (Family: none) | 1,3-5 |

Form PCT/ISA/210 (continuation of second sheet) (July 2009)

## INTERNATIONAL SEARCH REPORT

| International application No. |
|---|
| PCT/JP2014/072323 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☒ Claims Nos.:  2
   because they relate to parts of the international application that do not comply with the prescribed requirements to such an extent that no meaningful international search can be carried out, specifically:
   Claim 2 is unclearly described and does not satisfy the requirements of PCT Article 5 and Article 6, and therefore, a meaningful international search cannot be carried out.

3. ☐ Claims Nos.:
   because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**EP 3 043 044 A1**

## REFERENCES CITED IN THE DESCRIPTION

**Patent documents cited in the description**

- JP H8246890 A